# EUROPEAN PATENT APPLICATION

(11) **EP 2 511 181 A1**
(43) Date of publication of application: **17.10.2012**
(21) Application number: 12162771.5
(22) Date of filing: 30.03.2012
(51) Int. Cl.: B64G 6/00, B63C 11/10

(54) **Conformal harness suit interface**

(30) Priority: 12.04.2011 US 201161474443 P; 05.07.2011 US 201113175982
(71) Applicant: Hamilton Sundstrand Space Systems International, Inc., Windsor Locks CT 06096-1010 (US)
(72) Inventor: Overbeeke, Arend, Tolland, MA Massachusetts 01034 (US); Thomas, Kenneth S., Manchester, CT Connecticut 06040 (US); Satienpoch, Montira, Enfield, CT Connecticut 06082 (US)
(74) Representative: Tomlinson, Kerry John

(57) **Abstract**

A suit (12) includes a hard upper torso (14) having a visor (16) and providing an entry opening (30) and shoulder apertures (18). An interface (32) includes a harness (36) supporting a load plate (34). The harness is configured to be secured to a subject (28). A primary life support system (24) is mounted to the hard upper torso. The interface is arranged at the entry opening and is secured between the hard upper torso and the primary life support system in a donned condition. A method of donning the suit is provided, which includes donning a harness (36) that supports a load plate (34). A hard upper torso (14) includes an entry opening (30) through which the suit is entered. The load plate is positioned relative to the hard upper torso. A primary life support system (24) is closed over the load plate to secure the primary life support system relative to the hard upper torso.

## Description

### BACKGROUND

This disclosure relates to a suit for use in extra vehicular activities (EVA), such as lunar or Martian landscape exploration. This disclosure also relates to a method of donning, doffing and using the suit.

EVA pressure suits have been proposed in which a subject enters from the rear of a hard upper torso (HUT). The HUT provides a visor, shoulder apertures and a rear entry opening through which a subject enters the suit from an interior of a vehicle. The subject's head must be properly positioned within the visor during use. Soft lower and upper torsos are used with the HUT to fully encapsulate the subject.

The suit typically must accommodate subjects of different sizes, which makes positioning of the suit relative to the subject somewhat difficult both during donning and use. To address this concern, some suits have features of the soft suit, such as the arms and legs that may be more specifically sized to the subject. Also, a subject must carry the load of the suit. Some HUTs have been designed in which shoulder straps are secured directly to the HUT and which must be donned by the subject with external assistance. Current concepts may not provide adequate restraint in all restraint scenarios. Due to the inconvenience and difficulty of donning these shoulder straps in a rear entry HUT, subjects typically do no use the shoulder straps. Without shoulder straps, the HUT and subject move independently, potentially resulting in hard contact and injury of the subject. Independent movement additionally can result in loss of balance.

### SUMMARY

A suit includes a hard upper torso having a visor and providing an entry opening and shoulder apertures. An interface includes a harness supporting a load plate. The harness is configured to be secured to a subject. A primary life support system is mounted to the hard upper torso. The interface is arranged at the entry opening and is secured between the hard upper torso and the primary life support system in a donned condition.

A method of donning the suit is provided, which includes donning a harness that supports a load plate. A hard upper torso includes an entry opening through which the suit is entered. The load plate is positioned relative to the hard upper torso. A primary life support system is closed over the load plate to secure the primary life support system relative to the hard upper torso.

### BRIEF DESCRIPTION OF THE DRAWINGS

The disclosure can be further understood by reference to the following detailed description when considered in connection with the accompanying drawings wherein:
Figure 1A schematically illustrates a subject wearing an interface while in a vehicle prior to donning a suit.
Figure 1B is a perspective view of an example interface secured to the subject.
Figure 2 is a schematic view of the subject in the process of donning the suit.
Figure 3A is a schematic view of the subject with the suit in a donned' condition.
Figure 3B is a partial cross-sectional view of a load plate of the interface secured between a hard upper torso and a primary life support system.
Figure 3C is a plan view of the load plate located within the hard upper torso in the donned condition.

### DETAILED DESCRIPTION

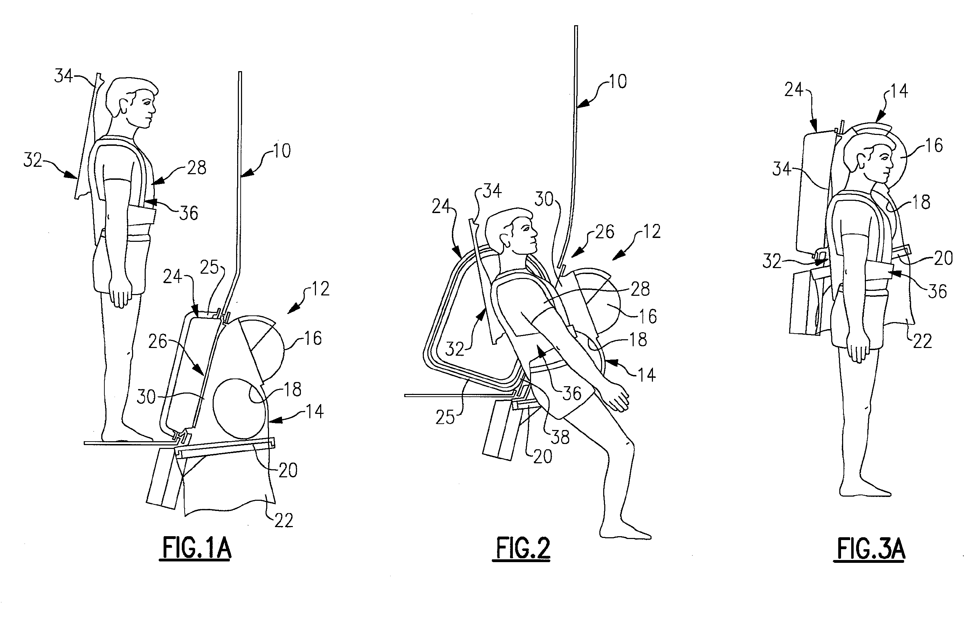

Referring to Figure 1A, a vehicle or habitat 10 is illustrated. A suit 12 is temporarily secured to the vehicle or habitat 10. A subject 28 enters the suit 12 from the vehicle 10 for extra vehicular activity (EVA). The suit 12 includes a hard upper torso (HUT) 14 having a visor 16 and shoulder apertures 18. The HUT 14 includes an entry opening 30 at its rear that is aligned with a port 26 in the vehicle 10. A cover 25 is secured to the vehicle 10 by a hinge 38 (Figure 2), for example, to seal the port 26 relative to the outside environment.

A waist bearing 20 supports a soft lower torso 22 that provides the legs and footwear of the suit (not shown). The waist bearing 20 is canted upward from the entry opening 30 toward the visor 16. The soft shoulder sizing system is omitted for clarity. A primary life support system (PLSS) 24 is secured to the suit 12 to provide life support to the subject 28 during EVA.

It is desirable to locate the HUT 14 relatively precisely with respect to a given subject to better ensure, for example, the subject's head is properly positioned within the visor 16 and their arms are desirably located with respect to the shoulder apertures 18. Moreover, it is desirable to ensure that the weight of the suit 12 is sufficiently supported during EVA to prevent bruising and injury to the subject. To this end, an interface 32 is worn by the subject 28 to bear the load of the suit 12 and position the suit 12 relative to the HUT 14 for a given subject.

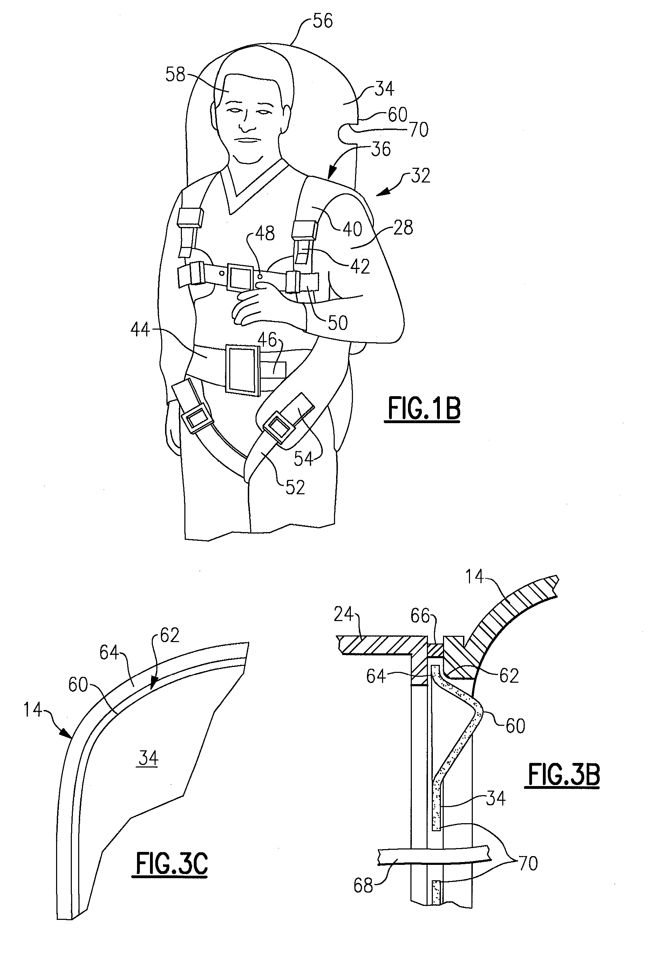

The interface 32 includes a load plate 34 secured to a harness 36, which is shown in more detail in Figure 1B. The harness 36 is highly adjustable to accommodate multiple subjects of differing sizes and proportions. Once the harness 36 is initially adjusted for a given subject, the interface 32 may be relatively easily donned and doffed by that subject.

In one example, the load plate 34 is a rigid structure constructed from a reinforced polymer, for example, such a light weight fiberglass reinforced resin. When donned, the load plate 34 extends from the hip area of the subject 28 and along the back to the head area.

The harness 36 includes shoulder straps 40 that provides positioning and supports some weight of the suit 12 when donned. The shoulder straps 40 include shoulder adjusters 42, which enable a vertical adjustment of the load plate 34 relative to the subject 28. The harness 36 also includes a waist belt 44, which primarily bears the load of the suit 12 through the load plate 34. A waist adjuster 46 is provided on the waist belt 44 that enables the waist belt 44 to be tightened or loosened around the subject's midsection. A chest belt 48 interconnects the shoulder straps 40 to prevent the shoulder straps 40 from slipping from the subject's shoulders, holding the interface 32 tight to the subject's upper torso. A chest adjuster 50 is provided on the chest belt 48 to tighten or loosen the chest belt 48 based upon a subject's size.

The harness 36 also optionally includes leg straps 52 in one example to prevent the load plate 34 from moving vertically upward during maneuvers in which the subject 28 is inverted. The leg straps 52 include leg adjusters 54 that may be tightened or loosened. The adjusters 42, 46, 50, 54 may be any suitable configuration, for example in a conventional manner using such techniques typically found on a backpack or parachuting harness. In one example, the adjusters are provided by buckles with a strap having a loose end that may be pulled to tighten the respective strap. The buckle may be manipulated to loosen the respective strap.

As can be appreciated from the above description, the harness 36 can be tailored to a wide range of subject sizes to ensure desired positioning of the load plate 34 for a given subject. For example, the load plate 34 provides an interface feature 56, such as the top of the load plate 34, which may be positioned during trial fitting of the interface 32 to a subject before donning of the suit 12. Such an initial fitting ensures desired positioning of a reference point 58 of the subject 28, such as the subject's head relative to the visor 16 so that the suit 12 is properly fitted once donned. The straps and belts 40, 44, 48, 52 may also include fastening elements that enable portions of the respective strap or belt to be secured and unsecured from one another to facilitate ease during donning and doffing.

Figure 2 illustrates a donning procedure in which the subject 28 enters the suit 12 through the entry opening 30 in the rear of the HUT 14. The load plate 34 and HUT 14 include complimentary locating features configured to position the HUT 14 relative to the interface 32. The HUT 14 may be carried directly or indirectly by the load plate 34.

Once in the suit 12, the load plate 34 is positioned relative to the HUT 14, as shown in Figure 3B and 3C. In one example, the load plate 34 includes a flange 64 having a perimeter 60 that is positioned within a recess 62 in the HUT 14. The perimeter 60 is located inboard of the seal 66 that surrounds the perimeter 60 such that the load plate 34 is precisely positioned relative to the HUT 14. In the example, the flange 64 transfers the load of the HUT 14 and the rest of the suit 12 to the harness 36 through the load plate 34. In one example, the load plate 34 is captured or retained between the PLSS 24 and the HUT 14 when the PLSS 24 is secured to the HUT 14. In the example, the seal 66 provides the pressure retention between the PLSS 24 and HUT 14.

The load plate 34 may include an aperture 70 that permits a communication element 68, such as tubing or electrical wire for communication or life support to pass between the PLSS 24 and the HUT 14.

Although an example embodiment has been disclosed, a worker of ordinary skill in this art would recognize that certain modifications would come within the scope of the invention, which is defined by the amended claims. For that reason, the following claims should be studied to determine their true scope and content.

## Claims

1. A suit (12) comprising:
a hard upper torso (14) having a visor (16) and providing an entry opening (30) and shoulder apertures (18);
an interface (32) including a harness (36) supporting a load plate (34), the harness configured to be secured to a subject (28); and
a primary life support system (24) mounted to the hard upper torso (14), the interface (32) arranged at the entry opening (30) and secured between the hard upper torso and the primary life support system in a donned condition.

2. The suit according to claim 1, wherein the hard upper torso (14) includes a waist bearing (20) canted upward from an entry opening toward a visor (16).

3. The suit according to claim 2, wherein the suit includes a soft lower torso (22) supported by the waist bearing (20).

4. The suit according to claim 1, 2 or 3 wherein the load plate (34) is constructed from a reinforced polymer.

5. The suit according to claim 1, 2, 3 or 4, wherein the load plate (34) includes an aperture (70) configured to permit communication and life support elements (68) to pass from the primary life support system (24) to the hard upper torso (14).

6. The suit according to any preceding claim, wherein the harness (36) includes adjustable shoulder straps (40).

7. The suit according to any preceding claim, wherein the harness (36) includes an adjustable waist belt (44).

8. The suit according to any preceding claim, wherein the harness (36) includes adjustable legs straps (52).

9. The suit according to any preceding claim, wherein the harness (36) includes an adjustable chest belt (48).

10. The suit according to any preceding claim, wherein the load plate (34)and hard upper torso (14) include complimentary locating features (62,64) configured to position the hard upper torso (14) relative to the interface (32); preferably wherein the locating features (62;64) are provided by a perimeter (60) on the load plate (34) and a recess (62) on the hard upper torso (14) receiving the perimeter.

11. A method of donning a suit (12) comprising the steps of:
adjusting a load plate (34) relative to a hard upper torso (14) and a subject (28);
positioning the load plate relative to the hard upper torso;
donning a harness (36) that supports the load plate;
entering the hard upper torso through its entry opening (30); and
closing a primary life support system (24) over the load plate (34) and securing the primary life support system relative to the hard upper torso (14).

12. The method according to claim 11, wherein the donning step includes adjusting shoulder straps (40) and a waist belt (44) relative to the subject (28).

13. The method according to claim 11 or 12, wherein the donning step includes adjusting leg straps (52) relative to the subject (28).

14. The method according to claim 11, 12 or 13, wherein the donning step includes adjusting a chest belt (48) relative to the subject (28).

15. The method according to claim 11, 12, 13 or 14 wherein the positioning step includes locating a perimeter (60) of the load plate (34) relative to a recess (62) on the hard upper torso (14) and the subject (28).
